(19) Europäisches Patentamt
European Patent Office
Office européen des brevets

(11) **EP 3 783 526 B1**

(12) **EUROPEAN PATENT SPECIFICATION**

(45) Date of publication and mention
of the grant of the patent:
**06.12.2023 Bulletin 2023/49**

(51) International Patent Classification (IPC):
**G06V 20/56** (2022.01)      **G06V 10/30** (2022.01)
**G06V 10/50** (2022.01)

(21) Application number: **19465546.0**

(22) Date of filing: **22.08.2019**

(52) Cooperative Patent Classification (CPC):
**G06V 20/56; G06V 10/30; G06V 10/50**

(54) **METHOD OF REMOVING STRAY LIGHT FROM AN EGO VEHICLE WINDOW IN A CAMERA ARRANGEMENT, CAMERA ARRANGEMENT AND COMPUTER PROGRAM FOR APPLYING SAID METHOD**

VERFAHREN ZUR ENTFERNUNG VON STREULICHT AUS EINEM EGO-FAHRZEUG-FENSTER IN EINER KAMERAANORDNUNG, KAMERAANORDNUNG UND COMPUTERPROGRAMM ZUR ANWENDUNG DES BESAGTEN VERFAHRENS

PROCÉDÉ D'ÉLIMINATION DE LUMIÈRE PARASITE D'UNE VITRE DE VÉHICULE ÉGO DANS UN AGENCEMENT DE CAMÉRA, AGENCEMENT DE CAMÉRA ET PROGRAMME INFORMATIQUE POUR APPLIQUER LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2021 Bulletin 2021/08**

(73) Proprietor: **Continental Autonomous Mobility Germany GmbH**
**85057 Ingolstadt (DE)**

(72) Inventors:
• **Burca, Cristian**
  **300704 Timisoara (RO)**
• **Botusescu, Adrian**
  **300704 Timisoara (RO)**
• **Krökel, Dieter**
  **90411 Nürnberg (DE)**
• **Erdei, Barna**
  **300704 Timisoara (RO)**

(74) Representative: **Schlögl, Michael Jens Uwe**
**Continental Automotive Romania SRL**
**Siemens Street 1**
**300704 Timisoara (RO)**

(56) References cited:
**WO-A1-2018/197763**

• **SIMON CHRISTIAN ET AL: "Reflection removal for in-vehicle black box videos", 2015 IEEE CONFERENCE ON COMPUTER VISION AND PATTERN RECOGNITION (CVPR), IEEE, 7 June 2015 (2015-06-07), pages 4231-4239, XP032793877, DOI: 10.1109/CVPR.2015.7299051 [retrieved on 2015-10-14]**
• **JUN YOUNG CHEONG ET AL: "Reflection Removal Under Fast Forward Camera Motion", IEEE TRANSACTIONS ON IMAGE PROCESSING, vol. 26, no. 12, 1 September 2017 (2017-09-01), pages 6061-6073, XP055665343, US ISSN: 1057-7149, DOI: 10.1109/TIP.2017.2748389**
• **V. KUDVA ET AL: "Detection of Specular Reflection and Segmentation of Cervix Region in Uterine Cervix Images for Cervical Cancer Screening", IRBM, vol. 38, no. 5, 15 September 2017 (2017-09-15), pages 281-291, XP055665353, AMSTERDAM, NL ISSN: 1959-0318, DOI: 10.1016/j.irbm.2017.08.003**
• **REINHARD E. ET AL.: "Color transfer between images", IEEE COMPUTER GRAPHICS AND APPLICATIONS, vol. 21, no. 5, 1 September 2001 (2001-09-01), pages 34-41, XP055011470, ISSN: 0272-1716, DOI: 10.1109/38.946629**

**Description**

Field of the invention

The invention is related to a method of removing stray light from an ego vehicle window in a camera arrangement, camera arrangement and computer program for applying said method, used in advanced driver assistance systems processing chain, particularly in the field of removing window reflections on the images acquired by such camera mounted in the interior of a vehicle.

Background of the invention

Advanced driver assistance systems ADAS cameras, hereafter alternatively called cameras, are more and more used in automotive industry for the purpose to provide the advanced driver assistance systems processing chain with quick and accurate detection and recognize of objects and persons from the exterior of the vehicle such as other vehicles, pedestrians, obstacles, traffic signs, lane markers, etc. The information captured by cameras is then analysed by ADAS processing chain and used to trigger a response by the vehicle, being used for a wide range of functions, including for example: autonomous emergency braking AEB, lane departure warning LDW, lane keep assist, blind spot detection, night vision cameras and adaptive lighting, traffic sign recognition, parking assistance, etc.

ADAS cameras are of various types, including for example: mono-cameras, stereo cameras, or surround view cameras.

ADAS cameras are used for autonomous vehicles as well as for vehicles with human driver.

Many ADAS cameras are windscreen-mounted facing forward. However, the ADAS camera may be mounted facing other windows of the vehicle in order to provide information from other areas of the exterior of said vehicle.

In order to comply with the requirements of advanced driver assistance systems, the ADAS camera must have a field of view as clear as possible, ideally showing only exterior images.

In reality, the images provided by the ADAS camera show not only the exterior of the vehicle, but also some amount of stray light. Stray light is used throughout this invention with the meaning of a light in an optical system, in this case the ADAS camera, which was not intended when said optical system was designed. In this invention, stray light takes the shape of reflections that appear on the window of the vehicle from various sources such as but not limited to objects of various colours placed within the vehicle. Stray light impedes the ADAS camera to take optimum quality pictures because the image provided by ADAS camera contains, apart from the screenshot of the exterior environment, a certain quantity of reflections, the quantity depending on various factors such as: intensity of outside light, materials and colours of the objects of the interior, dust, etc. Throughout this invention the terms stray light and reflection shall be used interchangeably.

Other terms that shall be used interchangeably in this invention are: picture(s), shot(s), image(s), having the same meaning of picture(s) acquired by the ADAS camera.

Yet another term used in this invention is ego vehicle designating the vehicle on whose window or windows stray light is disturbing and, for this reason, said stray light must be removed.

The stray light disturbing the field of view or the quality of the pictures of ADAS camera may result in inaccurate assessment of the road context putting vehicles and people's safety at risk, because decision of the driver- human or automated is taken by using the information provided by various ADAS cameras of the vehicle.

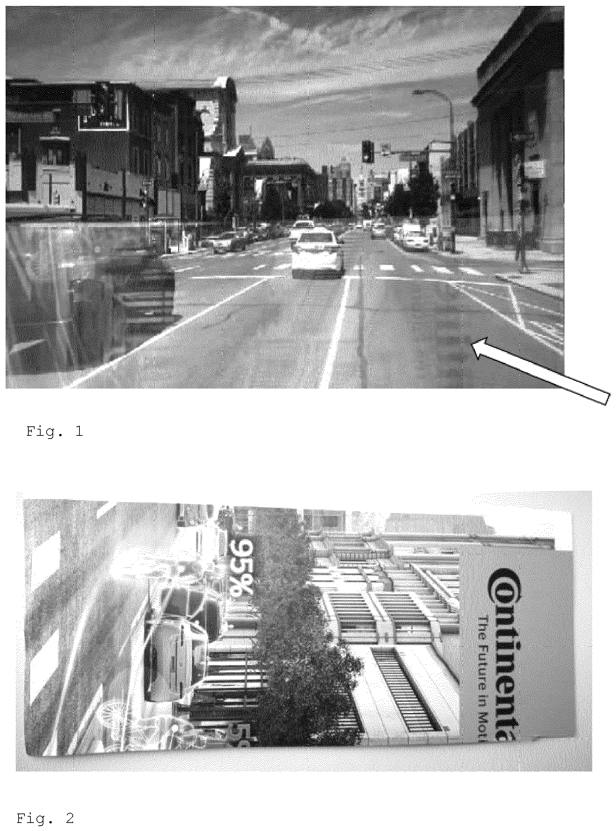

Fig. 1 shows the image seen through a windscreen where the source of stray light is a flyer illustrated in Fig. 2 placed on the dashboard of the ego vehicle.

As it can be seen in Fig. 1 stray light is present in this example mainly in the lower left part and lower right part impeding a clear view of the vehicle positioned at the left of ego vehicle. For this reason, stray light covers are being widely used in order to remove the stray light.

An example of stray light cover is disclosed in US 2019/0031117A1 published on 31 January 2019.

Stray light covers are quite efficient in removing stray light, they manage to remove most of the reflections, and they are of simple design that allows to customize different windscreen setups.

Non-patent literature addresses reflection removal as well. For example, a scientific paper entitled "Reflection Removal for In-Vehicle Black Box Videos" (D1) written by Christian Simon and In Kyu Park, from Department of Information and Communication Engineering, Inha University, Korea, and published in July 2015 at the 2015 IEEE Conference on Computer Vision and Pattern Recognition (CVPR), pages 4231-4239, XP032793877. The paper discloses a method to remove the reflection on the windscreen from in-vehicle black box videos. The method exploits the spatio-temporal coherence of reflection, which states that a vehicle is moving forward while the reflection of the internal objects remains static. The basis of the separation model is the two layered scene composed of reflection and background layers. D1 describes the identification of an area of reflection from an acquired frame sequence, followed by the calculation of an average image prior from the acquired frame sequence, where the number of frames in said frame sequence depends on the duration of driving; the refection layer R is synthetically reconstructed, and subtracted from an adjusted reference image to obtain background layer L. In a postprocessing step, luminance value for each pixel in background scene is adjusted by means of an average filter.

Another article to be mentioned is "Reflection Removal Under Fast Forward Camera Motion" (D2), by Jun Young Cheong et al., published in September 2017 by IEEE Transactions on Image Processing, vol. 26, no. 12, pages 6061-6073, XP055665343. D2 discloses an algorithm that simultaneously removes the reflections and small dirt artifacts from the in-vehicle black box videos under fast forward camera motion. The algorithm first separates stationary reflection and then restores the background scene; to this end, the same average image prior is introduced, and same two-layer model composed of stationary and background layers is proposed, where different gradient sparsity distributions are utilized in a region-based manner. Motion compensation in postprocessing is proposed to alleviate layer jitter due to vehicle vibrations. The outcome of this algorithm is reconstructed background scene (s) , obtained by extracting the stationary layer from real and synthetic video frames.

Another method of removing stray light is by using a polarization filter. For example, US 2017/0227791 A1 discloses smart sunglasses, smart window and smart mirror for augmenting human vision by means of adaptive polarization filter grids. US 2017/0227791 is based on the fact that removing stray light-called glare in this patent, is carried out by making use of a grid of electrically configurable filters, said filters being in connection with a polarization sensor for capturing polarization characteristics of incident light and in connection with a polarization analyzer for analyzing polarization characteristics of incidental light and determining a target polarization filter state, said polarization filter state referring to angles of the grid element, such as disclosed in an embodiment 0°, 45°, 90° and 135°. Smart window disclosed in US 2017/0227791 makes use of the polarization filter states mainly with the purpose of adapting the elimination of the glare to the line of sight of each individual driver.

Other example of using a polarization filter is presented in DE 102017202155 A1 that discloses a camera system and a method of eliminating stray light. The method is based in using a camera or two cameras placed in a vehicle behind the windscreen, said camera(s) being provided with image evaluation unit.

The camera(s) take(s) several outer shots of an external environment of the vehicle and compare the shots by means of the image evaluation unit.

The shots comprise static image components that correspond to the unwanted reflections, said static image components being recognized and extracted from the external shots by means of the image evaluation unit carrying image processing techniques.

Disadvantages of prior art

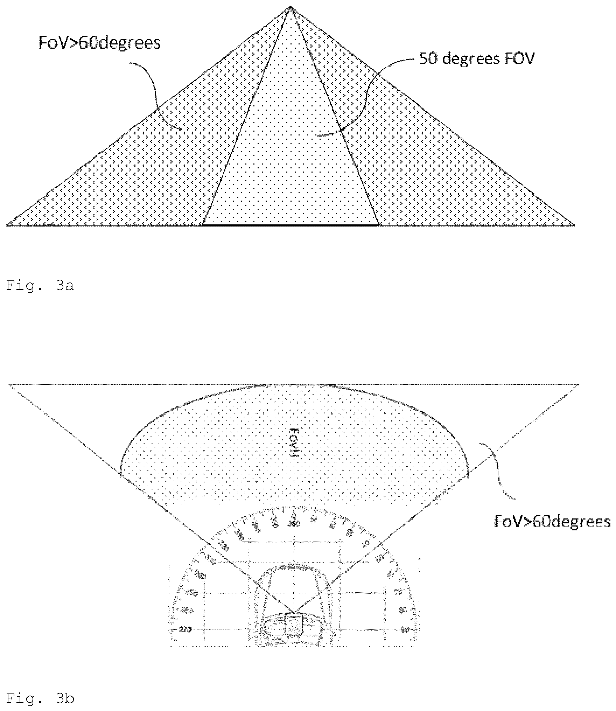

Use of stray light covers to remove stray light has a significant inconvenient in case of ADAS cameras with wide field of view. Throughout this invention, the term wide field of view refers to an angle of more than 60°, measured in a horizontal plane, as shown in Fig. 3a and Fig. 3b. Such cameras with wide field of view are more demanded because they support better driving assistance systems, more information about the road context being provided to ADAS. For example, a pedestrian may not be detected by the camera if the field of view of the camera is less than or equal to 60° but may be detected if the field of view of the camera is more than 60° inclusively.

The inconvenient is that for an ADAS camera with the wide field of view, the stray light cover becomes so large that it obstructs a large portion of driver's field of view. Fig. 3a shows a schematic view of the field of view for which the stray light cover still has reasonable dimensions, namely around 50° . Fig. 3b shows a non-limiting example of wide field of view, of around 90°, which is more than 60°.

Use of polarization filters in the state of art to remove stray light has the disadvantage of requiring additional components such as a physical component to be placed within the camera and another component to switch on, respectively off the filter, said additional components being source of additional costs. On the other side, the polarization filter has the disadvantage of attenuating the light that enters the camera, thus the images acquired are darker as compared with images taken in the absence of any polarization filter.

Problem solved by the invention

The problem to be solved by the invention is how to remove window reflections on the images acquired by an ADAS camera, particularly in case ADAS camera has a wide field of view, without obstructing driver's field of view and without adding any new physical component, while ensuring that the removal of window reflections is more adaptive to sudden changes of outdoor luminous intensity and more adaptive to use of existing resources of the ego vehicle.

Summary of the invention

In order to solve the problem, the inventors conceived a method of removing stray light from an ego vehicle window, as defined in claim 1.

In another aspect of the invention, it is provided a camera arrangement mounted in the interior of a vehicle and facing at least one window of the vehicle, and adapted to execute the steps of the method, as defined in claim 8.

In another aspect of the invention, it is provided a computer program as defined by claim 11, comprising instructions to cause the camera arrangement according to claims 8 to 10 to execute the method according to claims 1-7.

Advantages of the invention

The main advantages of this invention are the following:

i) Method and camera arrangement according to the invention improve the quality of the images acquired by ADAS camera with field of view more than 60° by removing efficiently a significant amount of window reflections. Although method and camera arrangement according to the invention may be used for any angle of the field of view, it is particularly advantageous to use them for ADAS cameras having a wide field of view, typically of more than 60°,

ii) Method and camera arrangement according to the invention are adaptable to any light conditions and in particular are suitable for use when sudden changes of luminous intensity of outdoor light is contemplated,

iii) Method and camera arrangement according to the invention make use of current apparatus and electronic components existing on the vehicle, including: ADAS camera, micro-controllers, memory or memories etc.,

iv) Method and camera arrangement according to the invention are suitable for use in the context of automated driving,

v) Method and camera arrangement according to the invention do not obstruct driver's field of view,

vi) Method and camera arrangement according to the invention, make efficient use of the computing resources of the camera arrangement.

Brief description of the drawings

Fig. 1 Example of stray light on the windscreen of the ego vehicle,

Fig. 2 Flyer placed on the dashboard used as source of reflection,

Fig. 3 Schematic view of the field of view FoV of the ADAS camera according to the invention as compared with prior art,

Fig. 3a Schematic view of the field of view FoV of the ADAS camera using the stray light cover -50° FoV, as compared with a wide field of view FoV of the ADAS camera of more than 60°,

Fig. 3b Schematic view of the field of view FoV of the ADAS camera using the method and the camera arrangement according to the invention,

Fig. 4 Camera arrangement according to the invention,

Fig. 5 Block diagram of the method according to the invention,

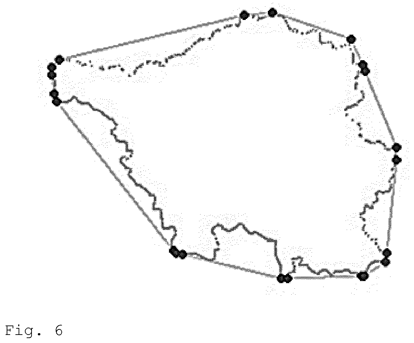

Fig. 6 Schematic view showing the principle of convex hull,

Fig. 7-14 Example of realization:

Fig. 7a the average image acquired after 5s incremental history,

Fig. 7b the average image acquired after 30s incremental history,

Fig. 8a Filtering of the average image acquired after 5s incremental history,

Fig. 8b Filtering of the average image acquired after 30s incremental history,

Fig. 9a Filtered binary image of the average image acquired after 5s incremental history,

Fig. 9b Filtered binary image of the average image acquired after 30s incremental history,

Fig. 10a Masked coloured image of the average image acquired after 5s incremental history,

Fig. 10b Masked coloured image of the average image acquired after 30s incremental history,

Fig. 11a Image masked with convex hull corresponding to the average image acquired after 5s incremental history,

Fig. 11b Image masked with convex hull corresponding to the average image acquired after 30s incremental history,

Fig. 12a Immediately subsequent raw image corresponding to the immediately subsequent raw image after the first 5s of incremental history,

Fig. 12b Immediately subsequent raw image corresponding to the immediately subsequent raw image after the first 30s of incremental history,

Fig. 13a Image showing the reflection-removed image corresponding to the immediately subsequent raw image after the first 5s of incremental history,

Fig. 13b Image showing the corrected image with reflection removed and luminous intensity compensated corresponding to the immediately subsequent raw image after the first 5s of incremental history,

Fig. 14a Image showing the reflection-removed image corresponding to the immediately subsequent raw image after the first 30 s of incremental history,

Fig. 14b Image showing the corrected image with reflection removed and luminous intensity compensated corresponding to the immediately subsequent raw image after the first 30 s of incremental history.

Figures 1-3a and the examples regarding compensation of luminous intensity are not according to invention and are present for illustration purposes only.

List of references in the drawings:

| 1 | Camera arrangement |
|---|---|
| 2 | ADAS Processing Chain |
| 10 | Exterior-facing Camera |
| 100 | Camera Lens Barrel |
| 101 | Camera Image Sensor |
| 102 | Image acquisition software component |
| 103 | At least one memory component |
| 104 | Image pre-processing software component |
| 104-1 | Standard deviation filter sub-component of the image pre-processing software component |
| FoV | Field of view of the camera 10 |

Detidetailed description

Detailed description

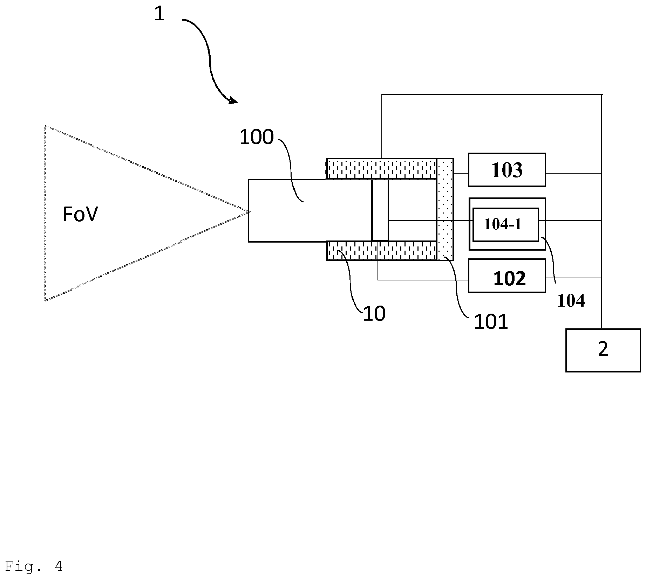

With reference to Fig. 4, the method is carried out in a camera arrangement 1 according to the invention, comprising an exterior-facing camera 10 being mounted in the interior of the vehicle, facing any window W of the vehicle, configured to provide images to an advanced driving system ADAS processing chain 2. Said ADAS processing chain 2 includes functions of support of the image detection, functions of detection of the persons and objects from the road context, modelling functions for the road context, functions related to the safety such as braking and so on. With reference to Fig. 4, the ADAS camera 10 comprises a lens barrel 100 where at least one lens is placed and a camera image sensor 101 which is configured to take images of the exterior of the vehicle and is further adapted to detect luminous intensity of outdoor light.

The camera image sensor 101 is controlled by an image acquisition software component 102 that has double role. The first role is to set the parameters for the functioning of the camera image sensor 101, such as but not limited to: picture exposure time, region of interest, that is from what zones of the exterior of the vehicle should images be taken, what is the acquisition period of the pictures, etc. The second role of the image acquisition software component 102 is to acquire images from the camera image sensor 101 at a pre-determined acquisition rate that depends on the characteristics of the camera image sensor 101. The image acquisition software component 102 comprises a counter of the number n of acquired images incrementing with one unit after each acquired image.

The ADAS camera 10 is further provided with an image pre-processing software component 104 having the role to carry out the processing of the images according to the steps of the method.

Both image acquisition software component 102 and image pre-processing software component 104 use at least one memory component 103. All images acquired by the image acquisition software component 102 are temporary stored in the at least one memory 103, wherefrom they are used by the image pre-processing software component 104 for the purpose of carrying out the subsequent steps of the method. All images processed by the image pre-processing software component 104 are then stored in the at least one memory 103, wherefrom they are used by the ADAS processing chain 2.

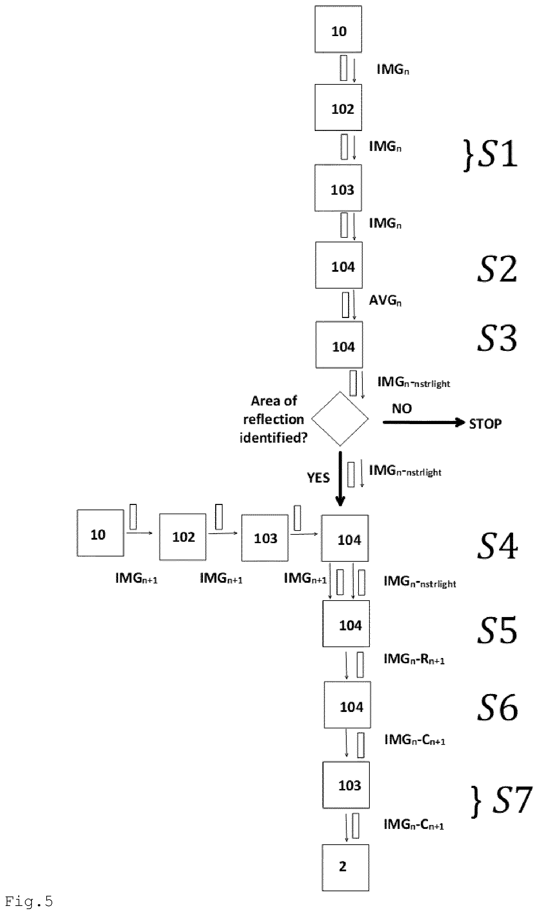

With reference to Fig. 5, according to the invention, the method consists of repetitive sequences of seven steps divided in two group of steps.

The first group of steps of the method aims to identify an area of reflection in the raw images IMGn acquired by the image acquisition software component 102 and transmitted to the image pre-processing software component 104, while the second group of steps of the method aims to remove reflection identified in the previous group of steps, reason for which the second group of steps is carried out only if, in the first step, said area of reflection was identified.

The word "area" stands for one area or a plurality of areas of the raw image IMGn entering the image pre-processing software component 104 for the purpose of carrying out the second group of steps.

In the first step of the method, a raw image IMGn is acquired by the image acquisition software component 102 from the camera 10. Each time a raw image IMGn is acquired by the software component 102 after the engine is turned on, the counter of the image acquisition software component 102 is incremented with one unit. Under certain conditions explained below, the counter is reset to zero during the current trip of the ego vehicle.

The raw image IMGn is sent by the software component 102 to the image pre-processing software component 104 by means of the at least one memory 103.

In order to accurately identify reflection, one raw image IMGn is not sufficient, therefore for the purpose of accurately identification of the stray light, a number n of images is acquired, forming a plurality of raw images IMGn for the purpose of calculating an average of the luminous intensity in step 2 of the method.

The number of raw images IMGn of the plurality of raw images IMGn depends on driving conditions, such as but not limited to: speed of the vehicle, change of the direction of the vehicle, differences of luminous intensity of outdoor light, etc.

The average of the luminous intensity of each corresponding pixel of the acquired plurality comprising a number n of raw images IMGn carried out in step 2 has as result an average image AVGn. Said average image AVGn is updated continuously. When an immediately subsequent raw image IMGn+1 enters the plurality of images, a new average image AVGn+1 is calculated based on the preceding average image AVGn replacing it.

In a preferred embodiment, the average image AVGn of the luminous intensity of the plurality of raw images IMGn is calculated as a mathematical average using the formula:

$$\text{Average}_n = (\text{Average}_{n-1} * \text{number of images of the plurality on which Average}_{n-1} \text{ was calculated} + \text{IMGn}) \, / \, (\text{number of images of the plurality on which Average}_{n-1} \text{ was calculated} + 1) \quad [\text{Eq.1}]$$

Permanent update of the average image AVGn is not convenient in some driving situations as described below.

One of the situations when permanent update of the average image AVGn is not convenient, is the situation when the background and the luminous intensity of the pixels is changed due to the vehicle changes direction of driving. Therefore, whenever the yaw angle rate of ego vehicle is above a pre-determined yaw angle rate threshold, the counter of the acquisition software component 102 incrementing the number n of acquired raw images IMGn is reset to zero and a new plurality of images is used for calculating the average image AVGn.

Another case when permanent update of the average image AVGn is not convenient, is the situation when there is a sudden change of the luminous intensity.

This sudden change is expressed as a change of image luminous intensity taking place between during the last up to ten raw images IMGn of the time period for which the average image AVGn was calculated, provided that:

- there is a change of image luminous intensity in a percentage of the area of the raw images IMGn over a pre-determined area percentage threshold; and
- the respective area affected by the change of image luminous intensity has a difference of luminous intensity over a pre-determined luminous intensity difference threshold.

Therefore, whenever a sudden change of luminous intensity occurs, the counter of the acquisition software component 102 incrementing the number n of acquired raw images IMGn is reset to zero and a new plurality of images is used for calculating the average image AVGn.

Another situation when permanent update of the average image AVGn is not convenient, is when the speed of ego vehicle is below a speed threshold, because the background change is slow and might be interpreted in the average image as reflection. In case the speed of the ego vehicle falls below said speed threshold, update of the average image is no longer carried out until the vehicle's speed exceeds said speed threshold.

Therefore, if the speed of the ego vehicle is below a speed threshold, the average image AVGn remains equal to the last the average image AVGn-1 before the speed of the ego vehicle fell below said speed threshold, as long as the speed of the ego vehicle does not exceed said speed threshold. The same applies if any of the other conditions related to said change of direction, said change of luminous intensity or the combination of them that may reset the counter is, respectively are not met.

For all the above-referenced situations of change of direction, change of luminous intensity, or combination of them, the average image AVGn, as calculated based on a plurality of raw images IMGn taken before each respective change, is not relevant immediately after the change, because the proportion of raw images IMGn used to calculate the average acquired before the change - thus showing the old stray light, is larger than the proportion of raw images IMGn acquired after the change - thus showing the new stray light. By resetting the counter, the new plurality of raw images AVGn, based on which the future average images AVGn is to be calculated, will correspond to the new stray light occurred after the change of direction, change of luminous intensity or any combination of them. The reset of the counter of the image acquisition software component 102 to zero value has the advantage of making the method of the invention highly adaptive to a wide range of situations. In the third step of the method, the area of reflection is identified. Third step has two sub-steps:

In the first sub-step of the third step, a filtering of the average image AVGn is carried out by a standard deviation filter sub-component 104-1 of the image pre-processing software component 104. For each pixel of the average image AVGn, the standard deviation value of the luminous intensity of the pixel in respect to the luminous intensity of its neighbourhood pixels is calculated.

Then, in the second sub-step of the third step, a pre-determined pixel standard deviation intensity threshold is used by the image pre-processing software component 104 for creating a binary image, said binary image forming a mask IMGn-wstrlight covering the area of reflection, said area of reflection identified by the pixels whose standard deviation luminous intensity luminous intensity of the average image AVGn is above said pixel standard deviation intensity threshold.

If no pixel shows standard deviation intensity above said pixel standard deviation intensity threshold, there is no reflection to be removed.

In case there are pixels whose standard deviation intensity is above said pixel standard deviation intensity threshold, they are contained in the mask IMGn-wstrlight.

The second group of steps of the method deals with removing of the reflection. To this end, an immediately subsequent raw image IMGn+1 to said plurality of raw images IMGn is acquired in step 4 of the method by the image acquisition software component 102 from the camera 10 and sent to the image pre-processing software component 104 by means of the at least one memory 103.

This immediately subsequent raw image IMGn+1 is the image on which removal of reflection is carried out in step 5 of the method by a subtraction operated on each pixel of the reflection area previously identified. The subtraction can be represented schematically as follows:

```
Reflection-Removed_Image IMG-Rn+1 = Immediately subsequent
Raw_Image IMGn+1 - first weight * luminous intensity of each
corresponding pixel of said mask IMGn-wstrlight covering the area
of reflection from the average image AVGn [Eq.2]
```

First weight of the luminous intensity, expressed as a value comprised between 0 and 1, is dependent on the luminous intensity of the respective pixel of the immediately subsequent raw image IMGn+1. The more luminous the pixels of the immediately subsequent raw image IMGn+1, the greater the weight.

The dependency between the first weight of the luminous intensity and the luminous intensity of the pixels is determined by experimental basis and stored in the memory 102.

The output of this step is the reflection-removed image IMG-Rn+1, having the reflection removed from the area of reflection. After having removed the stray light from the immediately subsequent raw image IMGn+1, the areas corresponding to the reflection removed from the reflection-removed image IMG-Rn+1 are darker than the corresponding areas of said immediately subsequent raw image IMGn+1 before removal. These dark areas are capable of impairing the quality of the image to be sent to the ADAS processing chain 2, reason for which another operation is required before making the image available to the ADAS processing chain 2.

This operation is carried out in the sixth step of the method by means of the image pre-processing software component 104. It refers to compensating the loss of luminous intensity of the area of reflection of the reflection-removed image IMG-Rn+1. In order to do so, two sub-steps are required.

In the first sub-step of the sixth step, a calculation of the average factor of the loss of luminous intensity of the area of reflection is made by of the immediately subsequent raw image IMGn+1 between the reflection-removed image IMG-Rn+1 and the area of reflection of the immediately subsequent raw image IMGn+1. Then, using said average factor of the loss of luminous intensity, in the second sub-step of the sixth step, using said average factor of the loss of luminous intensity is carried out for compensating the loss of luminous intensity of the area of reflection of the reflection-removed image IMG-Rn+1.

In some embodiments (not part of the present invention), the average factor of the loss of luminous intensity used in the compensation of the loss of luminous intensity is applied using either gamma correction, or uniformly or using a second weight of the luminous intensity for the compensation of loss of luminous intensity of all pixels of the area of reflection of the reflection-removed image IMG-Rn+1.

The choice between the types of compensation depend on which one provides better compensation results. This is another way of making the method of the invention more adaptive to various situations.

The outcome of the sixth step is the corrected image with reflection removed and luminous intensity compensated IMG-Cn+1. This corrected image IMG-Cn+1 is temporary stored in the seventh step of the method in the at least one memory component 103 wherefrom it is used by the ADAS processing chain 2.

The inventors sought to make the method even more adaptive to various situations.

One example of fine tuning of the method is presented in another preferred embodiment. The inventors noticed that in some cases, the area of reflection identified in step 3 may have a non-convex shape with numerous irregularities that may, under certain conditions, lead to an unnecessary removal of reflection in step 4 creating irregular dark zones in the reflection-removed image IMG-Rn+1. To remedy this, a convex hull may be created by the image pre-processing software component 104 in an additional step 3.A after the identification of the area of reflection in step 3. This has the advantage of avoiding excessive darkening of the reflection-removed image IMG-Rn+1, which in turn avoids excessive compensation needed in step 5.

Yet another example of fine tuning of the method is presented in another preferred embodiment, being based on the observation that in most of the cases stray light does not affect the top portion of the raw image IMGn.

The actual size of the upper portion is between the top half and the top third, the examples being for illustration only and not limiting the scope of the invention.

In such cases, it is convenient to exclude the top part of the raw image IMGn from the application of the method and carry out the method only in respect to the remainder of the raw image IMGn. This is done in an additional step immediately before step 3, in a top filtering step 3.1 that excludes a portion of the raw image IMGn situated at its top from the reflection area identification step 3.

It is possible to combine the embodiments when top filtering step 3.1 is applied immediately before step 3 and the step of creating the convex hull 3.A is applied immediately after step 3, the advantage being a better adaptation of the method of the invention to various situations arising from practice.

In another preferred embodiment of the invention, the camera 10 is configured to face the windscreen of the ego vehicle for acquiring forward-facing images or the rear windscreen of the vehicle for acquiring rear-facing images or lateral windows for lateral-facing images.

In another preferred embodiment of the invention the camera 10 is configured to have a field of view of more than 60° measured in horizontal plane.

The camera arrangement 1 mounted in the interior of a vehicle and facing at least one window of the vehicle is adapted to execute the steps of the method.

Said camera arrangement 1 comprises an advanced driver assistance systems ADAS camera 10 comprising a camera lens barrel 100 including at least one lens and a camera image sensor 101 configured to take images of the exterior of the vehicle and further configured to detect luminous intensity of outdoor light. Said camera arrangement 1 comprises an image acquisition software component 102 configured to acquire raw images IMGn from the camera image sensor 101. The image acquisition software component 102 comprises a counter counting the number n of acquired raw images, being further configured to set camera image sensor 101 parameters such as: picture exposure time, region of interest, acquisition period, and further configured to send acquired raw images IMGn to at least one memory component 103 in order to be used by an image pre-processing software component 104.

The camera arrangement 1 comprises at least one memory 103, configured to temporary store the variables and parameters needed for the reflection removal, such as: the raw images IMGn, the average images AVGn, the average images AVGn comprising said mask IMGn-wstrlight, the reflection-removed images IMG-Rn+1, and corrected images with reflection removed and luminous intensity compensated IMG-Cn+1 and configured to store the number n of raw images IMGn of the plurality, the first weight used in step 5 of the method, the pixel standard deviation intensity threshold and configured to store the average factor.

The camera arrangement 1 comprises the image pre-processing software component 104, configured to receive raw images IMGn from the acquisition software component 102 by means of the at least one memory 103, configured to calculate said average images AVGn, to create a binary image forming a mask IMGn-wstrlight covering the area of reflection of said average images AVGn, to remove the reflection from the area of reflection of the immediately subsequent raw images IMGn+1 corresponding to said mask IMGn-wstrlight, to calculate of the average factor of the loss of luminous intensity, to compensate the loss of luminous intensity of the reflection-removed images IMG-Rn+1 and to send the corrected images with reflection removed and luminous intensity compensated IMG-Cn+1 to the at least one memory 103 be used by the advanced driving assistance system ADAS processing chain 2.

A standard deviation filter sub-component 104-1 of the image pre-processing software component 104 of the camera arrangement is configured to carry out filtering of the average images AVGn The camera 10, the image acquisition software component 102, the image pre-processing software component 104 exist in the absence of the invention as well, providing images to the ADAS processing chain 2.

The invention uses thus components that are already available in the setup of any modern vehicle by configuring each one of them to carry out the steps of the method. The combination of various embodiments of the invention has the advantage to adapt on to the multitude of practical situations when stray light needs to be correctly identified and removed and adapt to the characteristics of the components that exist in the ego vehicle.

The memory 103 of the camera arrangement 1 is further configured to store a pre-determined yaw angle rate threshold, and the image acquisition software component 102 is configured to reset to zero the counter and to use a new plurality of images for calculating the average image AVGn when the yaw angle rate of ego vehicle is above said pre-determined yaw angle rate threshold.

The memory 103 of the camera arrangement 1 is further configured to store a pre-determined area percentage threshold, a pre-determined luminous intensity difference threshold and the image acquisition software component 102 is configured to reset to zero the said counter and to use a new plurality of a number n of raw images for calculating the average image AVGn when there is a change of image luminous intensity taking place during the last up to ten raw images IMGn of the time interval for which the average image AVGn was calculated, provided that:

- there is a change of image luminous intensity in a percentage of the area of the raw images IMGn over said pre-determined area percentage threshold and
- the respective area affected by the change of image luminous intensity has a difference of luminous intensity over said pre-determined luminous intensity difference threshold.

The memory 103 of the camera arrangement 1 is further configured to store a pre-determined speed threshold, and the image acquisition software component 102 is configured to use the average image AVGn of the last average of luminous intensity, the average image AVGn-1 before the speed of the ego vehicle fell below said speed threshold.

The image pre-processing software component 104 of the camera arrangement 1 is, in another preferred embodiment, further configured to create the convex hull around the area of reflection identified in step 3 of the method.

The image pre-processing software component 104 of the camera arrangement 1 is, in another preferred embodiment, further configured to carry out the top area filtering step 3.1 that excludes a portion of the raw image IMGn situated at its top from the area reflection identification step 3.

In order to apply the method of the invention, a computer program is further provided.

The computer program comprises instructions to cause the camera arrangement 1 to execute the step 1 and 4 of the method (such instructions being provided for the image acquisition software component 102). The computer program comprises also instructions to cause the camera arrangement 1 to execute the steps 2,3,5,6 and 7 of the method, as well as the additional steps immediately before or immediately after step 3 (such instructions being provided for the image pre-processing software component 104), as described in the corresponding preferred embodiments.

Example of realization

The example of realization, referring to drawings of Figs. from 7 to 14, is used to better illustrate the method of the invention and refers to one of the possible combinations of the embodiments of the invention.

This example shall not be considered as limiting the working of the invention only to this combination of the embodiments. For this purpose, all examples of values given below shall be considered for illustration of the technical teaching of the invention and not for limiting the scope of the invention to the values mentioned.

In this example:

- the window is the windscreen; however, it is equally the rear window or any of the lateral windows,
- the method uses the mathematical average of the luminous intensity of the plurality of raw image IMGn, it includes the additional step 3.A. of creating the convex hull but does not include top area filtering,
- the acquisition rate of the camera image sensor 101 is at 30 fps (frames/per/second), thus the sequence of images is perceived as a video,
- the driving scenario is straight driving and no change of direction,
- for comparative exemplification, two intervals for the incremental history of the counter of the image acquisition software component 102 were considered: 5s and 30s.

As seen in Fig. 1 and Fig. 2 a flyer was placed on the dashboard of the ego vehicle as source of reflection. Fig. 1 shows an example of raw image IMGn containing the reflection.

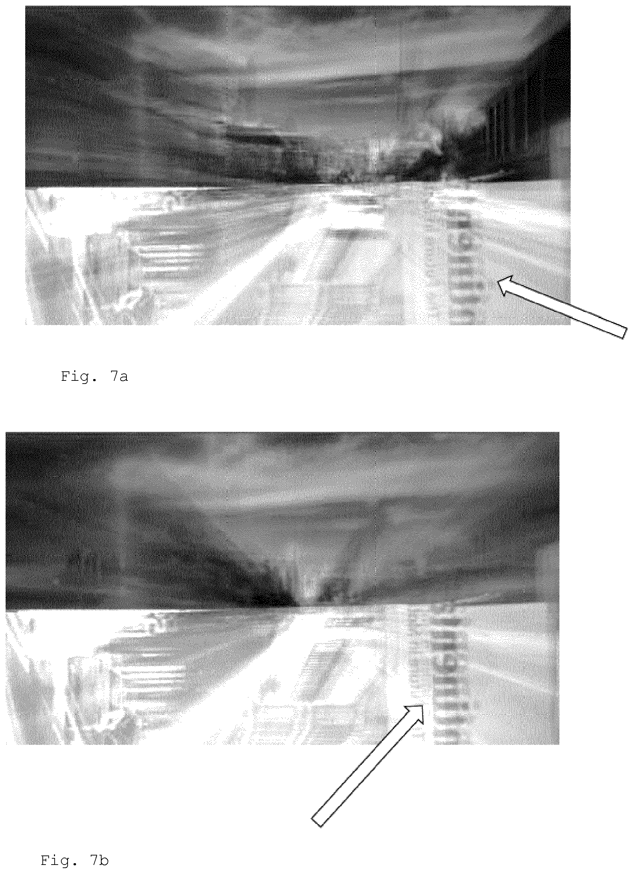

Fig. 7a and Fig. 7b depict two examples of average image AVGn, corresponding to step 2 of the method. Fig. 7a depicts the average image AVGn calculated for the plurality of raw images IMGn acquired during 5s from the reset of the counter of the image acquisition software component 102, while Fig. 7b depicts the average image AVGn calculated for the plurality comprising a number n of raw images IMGn acquired during 30s from the reset of the image acquisition software component 102, including the first 5s.

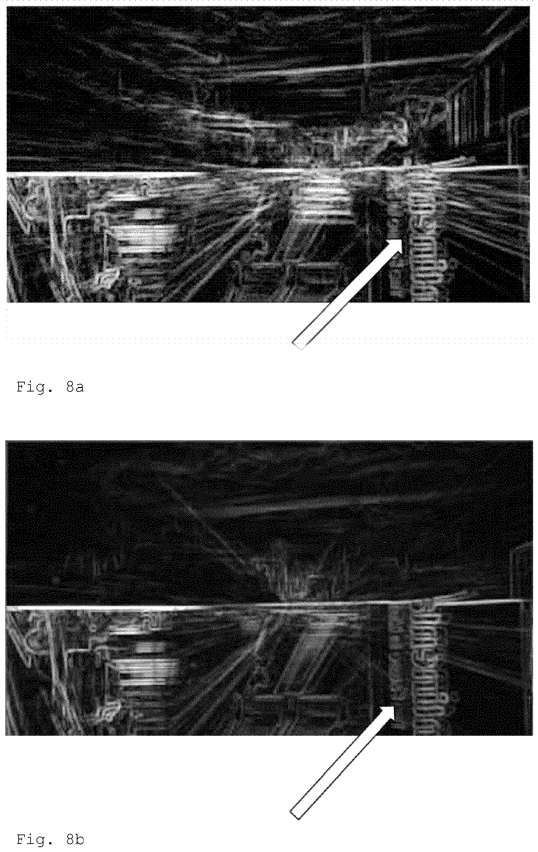

Comparing Fig. 7a with Fig. 7b, one can see that the reflection is better emphasized in the average image AVGn taken after 30s as compared to the average image AVGn taken after 5s, as some of the artefacts, such as parked cars, moving cars in front from Fig. 7a) are no longer present in Fig. 7b. Since any average image AVGn contains context as background and reflection as foreground, a longer incremental history helps emphasize better the reflection that is roughly constant over the time of the incremental history. Fig. 8, Fig. 9 and Fig. 10 illustrate step 3 of the method for corresponding to creating a binary image using a pre-determined pixel standard deviation intensity threshold, said binary image forming a mask IMGn-wstrlight covering the area of reflection by the pixels whose luminous intensity of the average image AVGn is above pixel standard deviation intensity threshold.

Fig. 8a, Fig. 9a and Fig. 10a illustrate the carrying out of step 3 of the method for the average image AVGn calculated for the plurality of raw images IMGn acquired during 5s from the reset of the counter of the image acquisition software component 102, whereas Fig. 8b, Fig. 9b and Fig. 10b illustrate the carrying out of step 3 of the method for the average image AVGn calculated for the plurality of raw images IMGn acquired during 30s from the reset of the counter of the image acquisition software component 102.

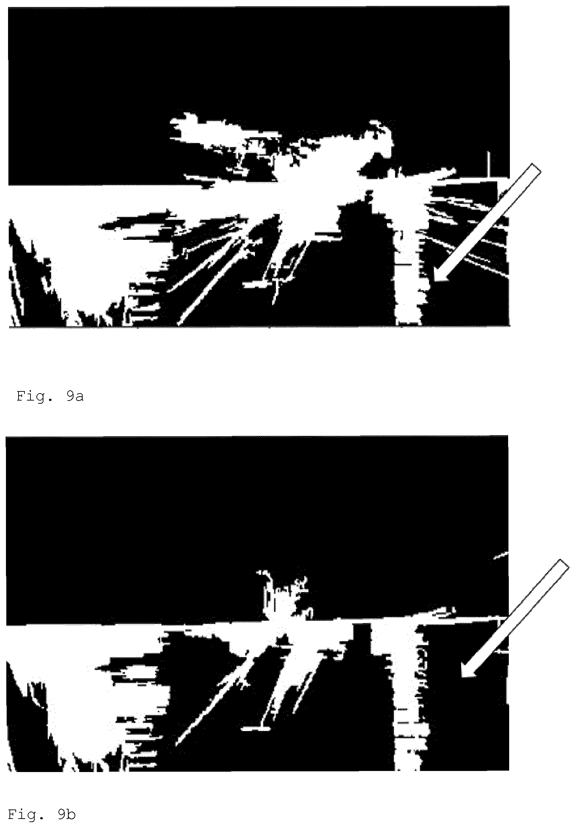

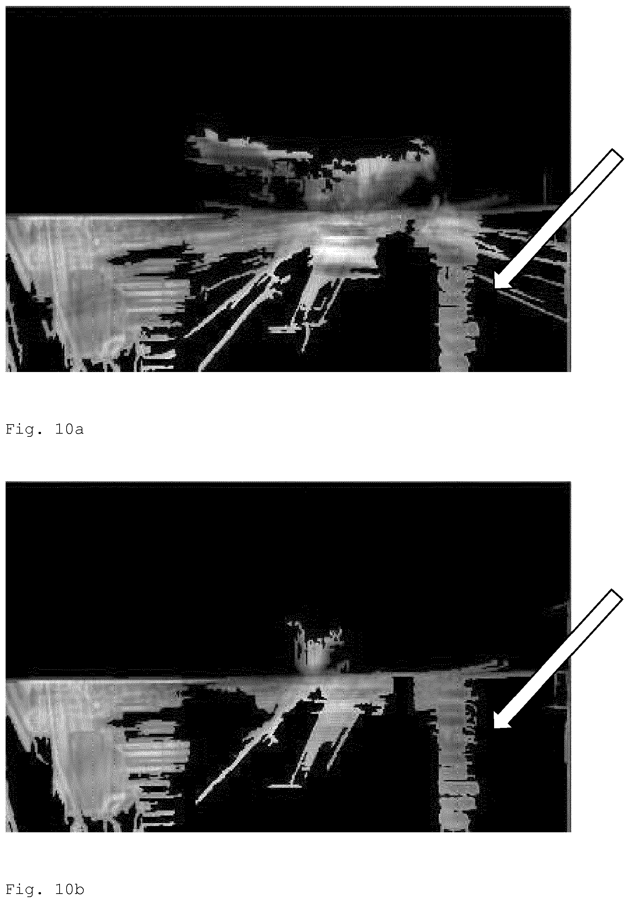

Fig. 8 illustrates the output of the filtering of the average image AVGn after first sub-step of step 3, Fig. 9 shows the filtered binary image created in the second sub-step of step 3 and Fig. 10 shows the masked image covering the area of reflection for all the pixels whose luminous intensity is above said pixel intensity threshold representing the output of the third step of the method, that is the average image comprising said mask IMGn-wstrlight.

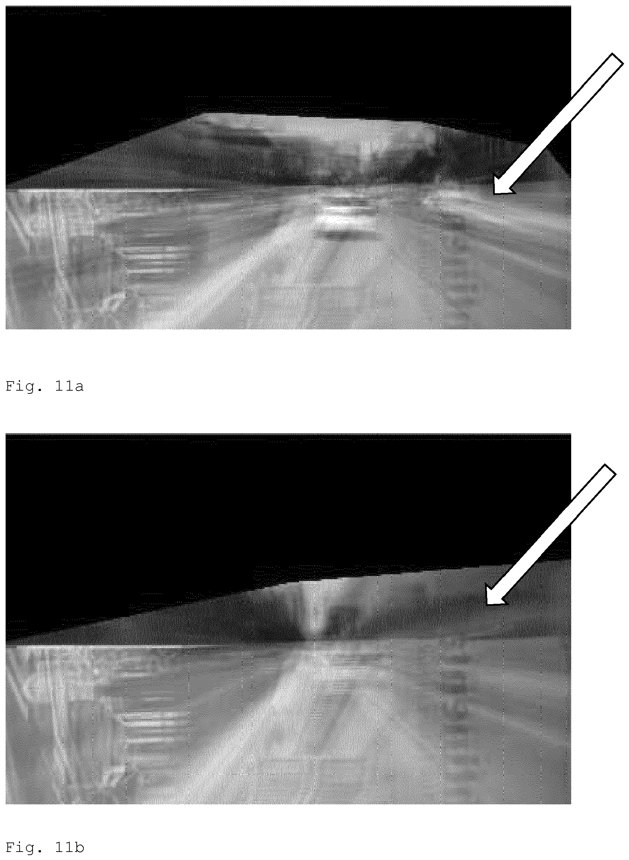

In this example of realization, after determining the area of reflection through the masked image that concludes the step 3 of the method, the convex hull is applied, as shown in Fig. 11a and Fig. 11b, where Fig. 11a illustrate the application of convex hull to the average image comprising said mask IMGn-wstrlight corresponding to incremental history of 5s from the reset of the counter of the image acquisition software component 102 and Fig. 11b illustrate the application of convex hull to the average image comprising said mask IMGn-wstrlight corresponding to incremental history of 30s from the reset of the counter of the image acquisition software component 102.

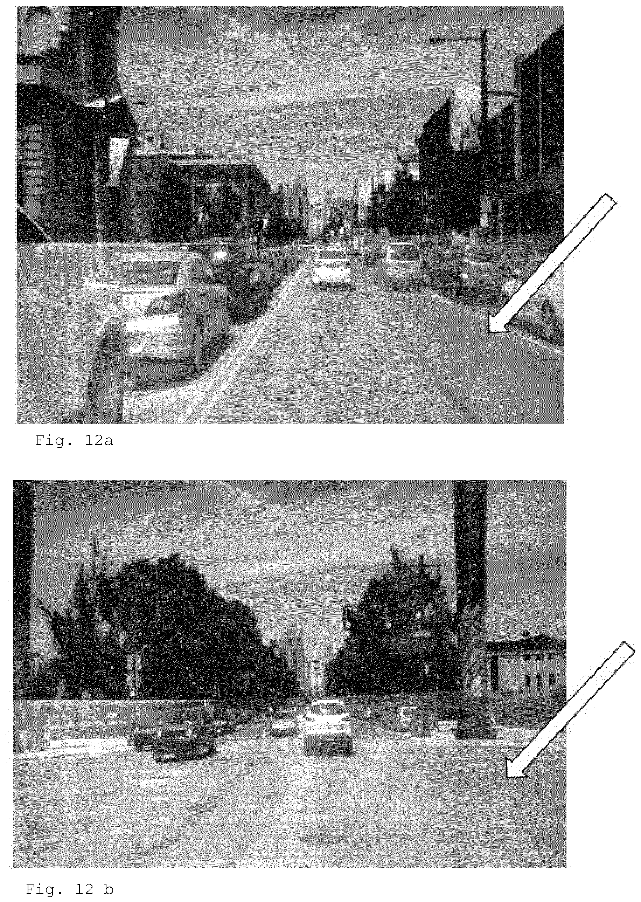

The second set of steps of the method starts with acquiring one immediately subsequent raw image IMGn+1 in step 4. This is shown in Fig. 12a - corresponding to the immediately subsequent raw image IMGn+1 after the first 5s of incremental history of the counter of the image acquisition software component 102, and in Fig. 12b - corresponding to the immediately subsequent raw image IMGn+1 after the first 30s of incremental history of the counter of the image acquisition software component 102, including the first 5s.

Then, in step 5 of the method, reflection is removed from the respective one immediately subsequent raw image IMGn+1, resulting the reflection-removed image IMG-Rn+1.

Further on, in step 6 of the method, the reflection-removed image IMG-Rn+1 undergoes a compensation of the loss of luminous intensity, as the portion of the reflection-removed image IMG-Rn+1 corresponding to the area of reflection removed is darker after carrying out step 5 than it was before step 5. Compensation of the loss of luminous intensity is carried out in step 6 of the method, firstly by comparing the reflection-removed image reflection-removed image IMG-Rn+1 and the one immediately subsequent raw image IMGn+1 and calculating the average factor of the loss of luminous intensity. Then, using the average factor of the loss of luminous intensity, compensation of the loss of luminous intensity is made on the area of reflection of the reflection-removed image IMG-Rn+1, either by gamma correction, or uniformly or using a second weight of the luminous intensity for the compensation of loss of luminous intensity of all pixels of the area of reflection of the reflection-removed image IMG-Rn+1.

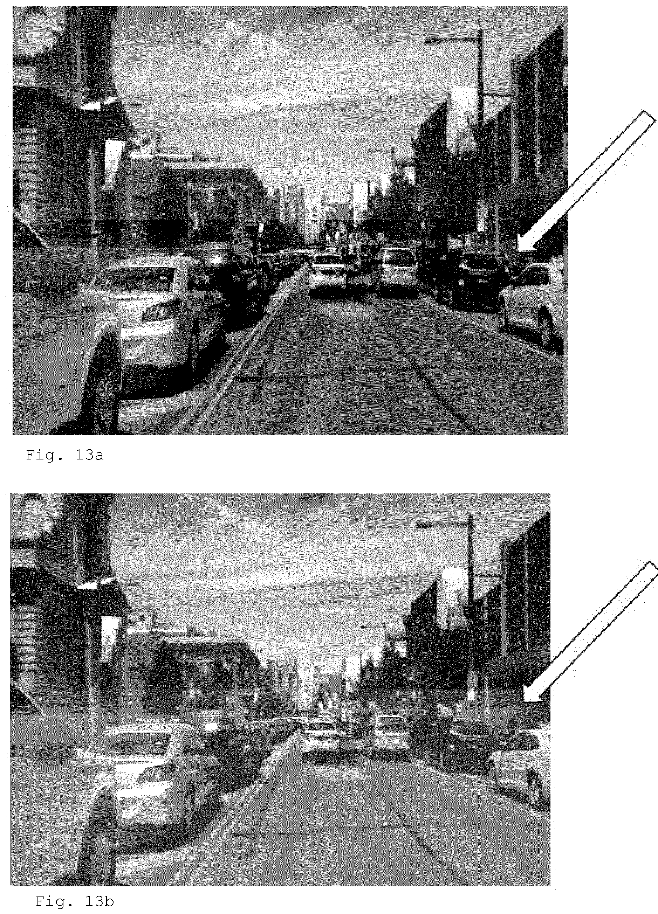

To illustrate the effect of the correction by compensation of the loss of luminous intensity, Fig. 13 shows the immediately subsequent raw image IMGn+1 after the first 5s of incremental history of the counter of the image acquisition software component 102: Fig. 13a illustrates reflection-removed image IMG-Rn+1 after completion of step 5 whereas Fig. 13b illustrates the corrected image with reflection removed and luminous intensity compensated IMG-Cn+1 after completion of step 6 of the method.

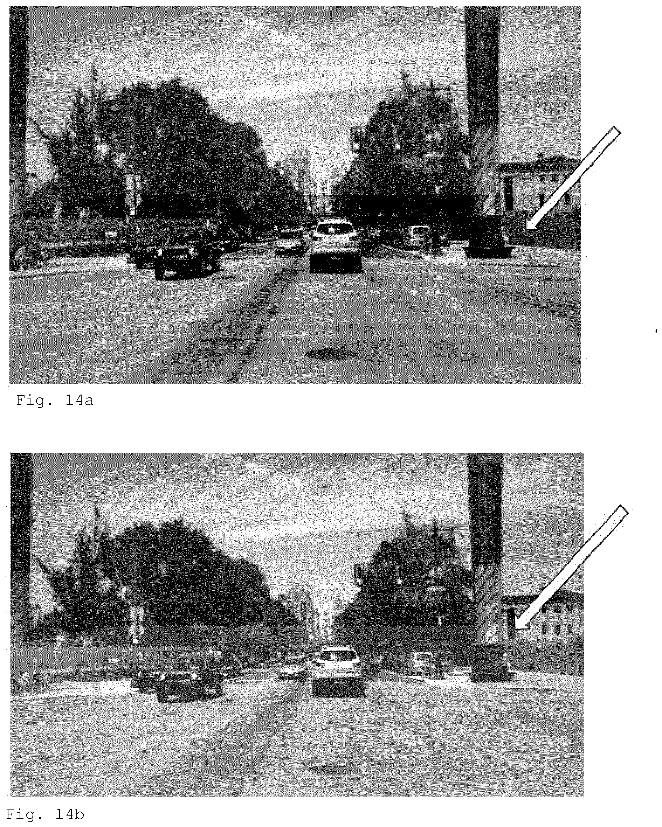

The same comparative illustration of the effect of correction by compensation of the loss of luminous intensity corresponding to the immediately subsequent raw image IMGn+1 after the first 30s of incremental history of the counter of the image acquisition software component 102 is shown in Fig. 14: Fig. 14a illustrates reflection-removed image IMG-Rn+1 after completion of step 5 whereas Fig. 14b illustrates the corrected image with reflection removed and luminous intensity compensated IMG-Cn+1 after completion of step 6 of the method.

The corrected image with reflection removed and luminous intensity compensated IMG-Cn+1 is temporary stored in step 7 of the method in the at least one memory component 103, wherefrom they are used by the advanced driving assistance system ADAS processing chain 2.

In the absence of the invention, the image acquisition software component 102 would have provided the advanced driving assistance system ADAS processing chain 2 with the immediately subsequent images IMGn+1 respectively illustrated in Fig. 12a and Fig. 12b. By applying the method of the invention in this example of realization, the corrected image with reflection removed and luminous intensity compensated IMG-Cn+1 illustrated in Fig. 13b replaces the one immediately subsequent image IMGn+1 of Fig. 12a and respectively the corrected image with reflection removed and luminous intensity compensated IMG-Cn+1 illustrated in Fig. 14b replaces the one immediately subsequent image IMGn+1 of Fig. 12b. By comparing Fig. 12a with Fig. 13b and, respectively the Fig. 12b with Fig. 14b, it can be seen that the corrected images with reflection removed and luminous intensity compensated IMG-Cn+1 as shown in Fig. 13b and Fig. 14b provided to the advanced driving assistance system ADAS processing chain 2 contain less reflection than the respective raw images IMGn+1 illustrated in Fig. 12a and, respectively Fig. 12b, which means that the problem of the invention was solved.

**Claims**

**1.** Method of removing stray light from an ego vehicle window in a camera arrangement (1) comprising an exterior-facing camera (10) configured to provide images to an advanced driving assistance system (ADAS) processing chain (2), said camera (10) being mounted in the interior of the ego vehicle and facing said window, wherein the following repetitive sequence of steps is carried out:

Step 1: Acquiring a raw image (IMGn) by an image acquisition software component (102) from said camera (10) and incrementing the number (n) of acquired raw images as counted by a counter of the image acquisition software component (102) with one unit, and sending the raw image (IMGn) to an image pre-processing software component (104) by means of at least one memory (103),

Step 2: Calculating, by means of the image pre-processing software component (104), for each corresponding pixel of a number (n) of successive raw images (IMGn) forming a plurality of raw images (IMGn) of an average of the luminous intensity, resulting an average image (AVGn) and sending the calculated average image (AVGn) to the at least one memory (103),

wherein the number (n) of the raw images (IMGn) of said plurality depends on driving conditions as follows:

the said counter of the acquisition software component (102) incrementing the number (n) of acquired raw images (IMGn) is reset to zero and a new plurality is used for calculating the average image (AVGn) when the yaw angle rate of ego vehicle is above a pre-determined yaw angle rate threshold, and

when there is a change of image luminous intensity taking place during the last period of up to ten raw images (IMGn) of the time interval for which the average image (AVGn) was calculated, provided that:

the respective change of image luminous intensity is in a percentage of the area of the raw images (IMGn) over a pre-determined area percentage threshold, and

the respective area affected by the change of image luminous intensity has a difference of luminous intensity over a pre-determined luminous intensity difference threshold,

and

- if the speed of the ego vehicle is below a speed threshold, the average image ($AVG_n$) remains equal to the last average image ($AVG_{n-1}$) before the speed of the ego vehicle fell below said speed threshold, as long as the speed of the ego vehicle does not exceed said speed threshold,

Step 3: Identifying an area of reflection in the average image (AVGn) by means of the image pre-processing software component (104) in two sub-steps:

in the first sub-step, applying filtering for each pixel of the entire area of the average image (AVGn) by means of a standard deviation filter sub-component (104-1) of the image pre-processing software component (104), in the second sub-step, creating a binary image using a pre-determined pixel standard deviation intensity threshold, said binary image forming a mask (IMGn-wstrlight) covering the area of reflection, said area of reflection identified by the pixels whose standard deviation luminous intensity of the average image (AVGn) is above said pixel standard deviation intensity threshold, resulting a masked average image (mask_IMGn-wstrlight) comprising the area of reflection (IMGn-wstrlight) and sending the masked average image (mask_IMGn-wstrlight) to the at least one memory (103),

Step 4: Acquiring by the image acquisition software component (102) from said camera (10) of an immediately subsequent raw image (IMGn+1) of said plurality and sending said immediately subsequent raw image (IMGn+1) to the image pre-processing software component (104) by means of the at least one memory (103),

Step 5: Removing, by means of the image pre-processing software component (104), the area of reflection from the immediately subsequent raw image (IMGn+1) by subtracting from the luminous intensity of each pixel of the area of reflection of the immediately subsequent raw image (IMGn+1) the luminous intensity of each corresponding pixel of the masked average image (mask IMGn-wstrlight), where the luminous intensity of each corresponding pixel of the mask is multiplied by a first weight, and said first weight is dependent on the luminous intensity of the respective pixel of the immediately subsequent raw image (IMGn+1), resulting a reflection-removed image (IMG-Rn+1) and sending it to the at least one memory (103);

Step 6: Compensating by means of the image pre-processing software component (104) of the loss of luminous intensity of the area of reflection of the reflection-removed image (IMG-Rn+1), in two sub-steps:

in the first sub-step, calculating of an average factor of the loss of luminous intensity between the area of reflection of the immediately subsequent raw image (IMGn+1) and the reflection-removed image (IMG-Rn+1),
in the second sub-step, using said average factor of the loss of luminous intensity for compensating the loss of luminous intensity of the area of reflection of the reflection-removed image (IMG-Rn+1), resulting a corrected image (IMG-Cn+1) with reflection removed and luminous intensity compensated,

Step 7: Temporary storing the corrected image (IMG-Cn+1) with reflection removed and luminous intensity compensated in the at least one memory component (103), wherefrom said corrected image is used by the advanced driving assistance system ADAS processing chain (2).

2. Method according to claim 1, wherein the average image ($AVG_n$) of the luminous intensity of the plurality is calculated as a mathematical average using the formula:

```
Average n = (Average n-1 * number of images of the plurality on

which Average n-1 was calculated + IMGn) / (number of images

of the plurality on which Average n-1 was calculated + 1).
```

3. Method according to the claims 1 or 2, wherein the method further comprises after step 3, a further step 3.A of creating a convex hull around the area of reflection.

4. Method according to the claims 1 or 2, wherein the method further comprises before the step 3, a top area filtering step 3.1 that excludes a portion of the raw image (IMGn) situated at its top from the area reflection identification step.

5. Method according to claims 3 and 4, wherein the method further comprises the step of top area filtering 3.1 before step 3, and the step 3.A of creating the convex hull after step 3.

6. Method according to any of the preceding claims wherein the camera (10) is configured to face the windscreen of the ego vehicle for acquiring forward-facing images or the rear windscreen of the vehicle for acquiring rear-facing images or lateral windows for lateral-facing images.

7. Method according to any of the preceding claims wherein the camera (10) is configured to have a field of view of more than 60° measured in horizontal plane.

8. Camera arrangement (1) mounted in the interior of a vehicle and facing at least one window of the vehicle, adapted to execute the steps of the method according to claims 1 to 7, the camera arrangement (1) comprising:

- an advanced driver assistance systems (ADAS) camera (10) comprising a camera lens barrel (100) including at least one lens and a camera image sensor (101) configured to take images of the exterior of the vehicle and further configured to detect luminous intensity of outdoor light,
- an image acquisition software component (102), configured to acquire raw images (IMGn) from the camera image sensor (101) and comprising a counter counting the number (n) of acquired raw images, and further configured to set camera image sensor (101) parameters such as: picture exposure time, region of interest, acquisition period, and further configured to send acquired raw images (IMGn) to at least one memory component (103) in order to be used by an image pre-processing software component (104),
- at least one memory (103), configured to temporary store the variables and parameters needed for the reflection removal, such as: the raw images (IMGn), the average images (AVGn), the average images (AVGn) comprising said mask (IMGn-wstrlight), the reflection-removed images (IMG-Rn+1), the corrected images (IMG-Cn+1) with reflection removed and luminous intensity compensated, the number (n) of raw images (IMGn) of the plurality, the first weight used in step 5 of the method, the pixel standard deviation intensity threshold for creating a binary image forming a mask (IMGn-wstrlight) covering the area of reflection and the average factor; the pre-determined yaw angle rate threshold, pre-determined area percentage threshold, a pre-determined luminous intensity difference threshold, pre-determined speed threshold,

- the image pre-processing software component (104), configured to receive raw images (IMGn) from the acquisition software component (102) by means of the at least one memory (103), configured to calculate said average images (AVGn), to create binary images forming a mask (IMGn-wstrlight) covering the area of reflection of said average images (AVGn), to remove the area of reflection of the immediately subsequent raw images (IMGn+1) corresponding to said mask (IMGn-wstrlight), to calculate of the average factor of the loss of luminous intensity, to compensate the loss of luminous intensity of the reflection-removed images (IMG-Rn+1) and to send the corrected images (IMG-Cn+1) with reflection removed and luminous intensity compensated to the at least one memory (103) to be used by the advanced driving assistance system ADAS processing chain (2); the image acquisition software component (102) being further configured to reset to zero the said counter and to use a new plurality for calculating the average image (AVGn) when the yaw angle rate of ego vehicle is above said pre-determined yaw angle rate threshold, to reset to zero the said counter, and to use a new plurality for calculating the average image (AVGn) when the driving conditions provided in claim 1 are fulfilled, to use the average image (AVGn) of the last average of luminous intensity, the average image (AVGn-1) before the speed of the ego vehicle fell below said speed threshold, and

- a standard deviation filter sub-component (104-1) of the image pre-processing software component (104) configured to carry out filtering of the average images (AVGn).

**9.** Camera arrangement (1) according to claim 8, wherein the image pre-processing software component (104) is further configured to create in step 3.A a convex hull around the area of reflection as it is defined in claim 3.

**10.** Camera arrangement (1) according to claim 8 or 9, wherein the image pre-processing software component (104) is further configured to perform the top area filtering step 3.1 as it is defined in claim 4.

**11.** A computer program comprising instructions to cause the camera arrangement (1) of any of the claims 8 to 10 to execute the method according to any of the claims 1 to 7.


**Patentansprüche**

**1.** Verfahren zum Entfernen von Streulicht von einem Ego-Fahrzeugfenster in einer Kameraanordnung (1), umfassend eine in den Außenraum gerichtete Kamera (10), ausgebildet zum Liefern von Bildern an eine Verarbeitungskette (2) eines Advanced Driving Assistance Systems, ADAS, wobei die Kamera (10) in dem Innenraum des Ego-Fahrzeugs montiert und dem Fenster zugewandt ist, wobei die folgende repetitive Abfolge von Schritten ausgeführt wird:

Schritt 1: Erfassen eines Rohbilds (IMGn) durch eine Bilderfassung-Softwarekomponente (102) von der Kamera (10) und Inkrementieren der Anzahl (n) von erfassten Rohbildern, wie durch einen Zähler der Bilderfassung-Softwarekomponente (102) gezählt, um eine Einheit, und Senden der Rohbilder (IMGn) an eine Bildvorverarbeitung-Softwarekomponente (104) mittels mindestens eines Arbeitsspeichers (103),
Schritt 2: Berechnen, mittels der Bildvorverarbeitung-Softwarekomponente (104), für jedes entsprechende Pixel einer Anzahl (n) von aufeinanderfolgenden Rohbildern (IMGn), die eine Vielzahl von Rohbildern (IMGn) bilden, eines Durchschnitts der Lichtintensität, was zu einem Durchschnittsbild (AVGn) führt,

und Senden des berechneten Durchschnittsbilds (AVGn) an den mindestens einen Arbeitsspeicher (103), wobei die Anzahl (n) der Rohbilder (IMGn) der Vielzahl folgendermaßen von Fahrbedingungen abhängt:

der Zähler der Erfassung-Softwarekomponente (102), der die Anzahl (n) von erfassten Rohbildern (IMGn) inkrementiert, wird auf null zurückgesetzt und eine neue Vielzahl wird für Berechnen des Durchschnittsbilds (AVGn) verwendet, wenn die Gierwinkelrate des Ego-Fahrzeugs über einem vorbestimmten Gierwinkelratenschwellenwert liegt, und
wenn eine Änderung einer Bildlichtintensität während des letzten Zeitraums von bis zu zehn Rohbildern (IMGn) des Zeitintervalls, für das das Durchschnittsbild (AVGn) berechnet wurde, stattfindet, vorausgesetzt dass:

die jeweilige Änderung der Bildlichtintensität in einem Prozentanteil des Gebiets der Rohbilder (IMGn) über einem vorbestimmten Gebietsprozentanteilschwellenwert liegt, und
das jeweilige von der Änderung der Bildlichtintensität betroffene Gebiet eine Differenz an Lichtintensität über einem vorbestimmten Lichtintensitätsdifferenzschwellenwert aufweist, und,

- falls die Geschwindigkeit des Ego-Fahrzeugs unter einem Geschwindigkeitsschwellenwert liegt, bleibt das Durchschnittsbild (AVGn) gleich dem letzten Durchschnittsbild (AVGn-1) bevor die Geschwindigkeit des Ego-Fahrzeugs unter den Geschwindigkeitsschwellenwert fiel, solange die Geschwindigkeit des Ego-Fahrzeugs den Geschwindigkeitsschwellenwert nicht überschreitet,

Schritt 3: Identifizieren eines Reflexionsgebiets in dem Durchschnittsbild (AVGn) mittels der Bildvorverarbeitung-Softwarekomponente (104) in zwei Subschritten: in dem ersten Subschritt, Anwenden von Filterung für jedes Pixel des gesamten Gebiets des Durchschnittsbilds (AVGn) mittels einer Standardabweichung-Filtersubkomponente (104-1) der Bildvorverarbeitung-Softwarekomponente (104), in dem zweiten Subschritt, Schaffen eines Binärbilds unter Verwendung eines vorbestimmten Pixel-Standardabweichung-Intensitätsschwellenwerts, wobei das Binärbild eine Maske (IMGn-wstrlight) bildet, die das Reflexionsgebiet abdeckt, wobei das Reflexionsgebiet durch die Pixel, deren Lichtintensität-Standardabweichung des Durchschnittsbilds (AVGn) über dem Standardabweichung-Intensitätsschwellenwert liegt, identifiziert wird,
was zu einem maskierten Durchschnittsbild (mask_IMGn-wstrlight), das das Reflexionsgebiet (IMGn-wstrlight) umfasst, führt, und Senden des maskierten Durchschnittsbilds (mask_IMGn-wstrlight) an den mindestens einen Arbeitsspeicher (103),
Schritt 4: Erfassen, durch die Bilderfassung-Softwarekomponente (102) von der Kamera (10), eines unmittelbar nachfolgenden Rohbilds (IMGn+1) der Vielzahl und Senden der unmittelbar nachfolgenden Rohbilder (IMGn+1) an die Bildvorverarbeitung-Softwarekomponente (104) mittels des mindestens einen Arbeitsspeichers (103),
Schritt 5: Entfernen, mittels der Bildvorverarbeitung-Softwarekomponente 104, des Reflexionsgebiets aus dem unmittelbar nachfolgenden Rohbild (IMGn+1) durch Subtrahieren der Lichtintensität von jedem entsprechenden Pixel des maskierten Durchschnittsbilds (mask_IMGn-wstrlight) von der Lichtintensität von jedem Pixel des Reflexionsgebiets des unmittelbar nachfolgenden Rohbilds (IMGn+1), wobei die Lichtintensität von jedem entsprechenden Pixel der Maske mit einem ersten Gewicht multipliziert wird, und wobei das erste Gewicht von der Lichtintensität des jeweiligen Pixels des unmittelbar nachfolgenden Rohbilds (IMGn+1) abhängt, was zu einem reflexionsentfernten Bild (IMG-Rn+1) führt, und Senden desselben an den mindestens einen Arbeitsspeicher (103);
Schritt 6: Kompensieren, mittels der Bildvorverarbeitung-Softwarekomponente (104), des Verlusts an Lichtintensität des Reflexionsgebiets des reflexionsentfernten Bilds (IMG-Rn+1), in zwei Subschritten:

in dem ersten Subschritt, Berechnen eines Durchschnittsfaktors des Verlusts an Lichtintensität zwischen dem Reflexionsgebiet des unmittelbar nachfolgenden Rohbilds (IMGn+1) und dem reflexionsentfernten Bild (IMG-Rn+1),
in dem zweiten Subschritt, Verwenden des Durchschnittsfaktors des Verlusts an Lichtintensität zum Kompensieren des Verlusts an Lichtintensität des Reflexionsgebiets des reflexionsentfernten Bilds (IMG-Rn+1), was zu einem korrigierten Bild (IMG-Cn+1) mit Reflexion entfernt und Lichtintensität kompensiert führt,

Schritt 7: temporäres Speichern des korrigierten Bilds (IMG-Cn+1) mit Reflexion entfernt und Lichtintensität kompensiert in der mindestens einen Arbeitsspeicherkomponente (103), von der aus das korrigierte Bild durch die Verarbeitungskette (2) des Advanced Driving Assistance Systems, ADAS, verwendet wird.

2. Verfahren nach Anspruch 1, wobei das Durchschnittsbild (AVG$_n$) der Lichtintensität der Vielzahl als ein mathematischer Durchschnitt unter Verwendung der folgenden Formel berechnet wird: Durchschnitt$_n$ = (Durchschnitt$_{n-1}$ * Anzahl von Bildern der Vielzahl, an der der Durchschnitt$_{n-1}$ berechnet wurde + IMGn) / (Anzahl von Bildern der Vielzahl, an der der Durchschnitt$_{n-1}$ berechnet wurde + 1).

3. Verfahren nach Ansprüchen 1 oder 2, wobei das Verfahren ferner nach dem Schritt 3 einen weiteren Schritt 3.A des Schaffens einer konvexen Hülle um das Reflexionsgebiet herum aufweist.

4. Verfahren nach Ansprüchen 1 oder 2, wobei das Verfahren ferner, vor dem Schritt 3, einen Obergebietsfilterungsschritt 3.1 aufweist, der einen Anteil des Rohbilds (IMGn), der sich an dessen Oberteil befindet, von dem Gebietsreflexionsidentifikationsschritt ausschließt.

5. Verfahren nach Ansprüchen 3 und 4, wobei das Verfahren ferner den Schritt der Obergebietsfilterung 3.1 vor dem Schritt 3 und den Schritt 3.A des Schaffens der konvexen Hülle nach Schritt 3 aufweist.

6. Verfahren nach einem der vorhergehenden Ansprüche, wobei die Kamera (10) dafür ausgebildet ist, der Windschutzscheibe des Ego-Fahrzeugs zum Erfassen von vorwärtsgerichteten Bildern oder der Heckscheibe des Fahrzeugs zum Erfassen von heckwärtigen Bildern oder Seitenfenstern für seitenwärtige Bilder zugewandt zu sein.

7. Verfahren nach einem der vorhergehenden Ansprüche, wobei die Kamera (10) dafür ausgebildet ist, ein Sichtfeld von mehr als 60° aufzuweisen, gemessen in der Horizontalebene.

8. Kameraanordnung (1), montiert im Innenraum eines Fahrzeugs und mindestens einem Fenster des Fahrzeugs zugewandt, eingerichtet zum Ausführen der Schritte des Verfahrens nach Ansprüchen 1 bis 7, wobei die Kameraanordnung (1) Folgendes umfasst:

- eine Kamera (10) eines Advanced Driver Assistance Systems, ADAS, umfassend ein Kameraobjektiv (100), beinhaltend mindestens eine Linse, und einen Kamerabildsensor (101), ausgebildet zum Aufnehmen von Bildern des Außenraums des Fahrzeugs und ferner ausgebildet zum Detektieren von Lichtintensität von Außenlicht,
- eine Bilderfassung-Softwarekomponente (102) ausgebildet zum Erfassen von Rohbildern (IMGn) von dem Kamerabildsensor (101) und umfassend einen Zähler zum Zählen der Anzahl (n) der erfassten Rohbilder, und ferner ausgebildet zum Einstellen von Parametern des Kamerabildsensors (101), wie etwa: Bildbelichtungszeit, Region von Interesse, Erfassungszeitraum, und ferner ausgebildet zum Senden erfasster Rohbilder (IMGn) zu mindestens einer Arbeitsspeicherkomponente (103), damit diese durch eine Bildvorverarbeitung-Softwarekomponente (104) verwendet werden,
- mindestens einen Arbeitsspeicher (103), ausgebildet zum temporären Speichern der Variablen und Parameter, die für die Reflexionsentfernung benötigt werden, wie etwa: die Rohbilder (IMGn), die Durchschnittsbilder (AVGn), wobei die Durchschnittsbilder (AVGn) die Maske (IMGn-wstrlight) umfassen, die reflexionsentfernten Bilder (IMG-Rn+1), die korrigierten Bilder (IMG-Cn+1) mit Reflexion entfernt und Lichtintensität kompensiert, die Anzahl (n) von Rohbildern (IMGn) der Vielzahl, das erste Gewicht, das in Schritt 5 des Verfahrens verwendet wurde, der Pixel-Standardabweichung-Intensitätsschwellenwert zum Schaffen eines Binärbilds, das eine Maske (IMGn--wstrlight) bildet, die das Reflexionsgebiet abdeckt, und der Durchschnittsfaktor; der vorbestimmte Gierwinkelratenschwellenwert, der vorbestimmte Gebietsprozentanteilschwellenwert, ein vorbestimmter Lichtintensitätsdifferenzschwellenwert, ein vorbestimmter Geschwindigkeitsschwellenwert,
- wobei die Bildvorverarbeitung-Softwarekomponente (104) ausgebildet ist zum Empfangen von Rohbildern (IMGn) von der Erfassung-Softwarekomponente (102) mittels des mindestens einen Arbeitsspeichers (103), ausgebildet zum Berechnen der Durchschnittsbilder (AVGn), Schaffen von Binärbildern, die eine Maske (IMGn-wstrlight) bilden, die das Reflexionsgebiet der Durchschnittsbilder (AVGn) abdeckt, Entfernen des Reflexionsgebiets der unmittelbar nachfolgenden Rohbilder (IMGn+1) entsprechend der Maske (IMGn-wstrlight), Berechnen des Durchschnittsfaktors des Verlusts an Lichtintensität, Kompensieren des Verlusts an Lichtintensität der reflexionsentfernten Bilder (IMG-Rn+1) und Senden der korrigierten Bilder (IMG-Cn+1) mit Reflexion entfernt und Lichtintensität kompensiert an den mindestens einen Arbeitsspeicher (103) zur Verwendung mit der Verarbeitungskette (2) des Advanced Driving Assistance Systems, ADAS, wobei die Bilderfassung-Softwarekomponente (102) ferner ausgebildet ist zum Rücksetzen des Zählers auf null und zum Verwenden einer neuen Vielzahl zum Berechnen des Durchschnittsbilds (AVGn), wenn der Gierwinkel des Ego-Fahrzeugs über dem vorbestimmten Gierwinkelratenschwellenwert liegt, zum Rücksetzen des Zählers auf null, und zum Verwenden einer neuen Vielzahl zum Berechnen des Durchschnittsbilds (AVGn), wenn die in Anspruch 1 bereitgestellten Fahrbedingungen erfüllt sind, zum Verwenden des Durchschnittsbilds (AVGn) des letzten Durchschnitts von Lichtintensität, des Durchschnittsbilds (AVGn-1) bevor die Geschwindigkeit des Ego-Fahrzeugs unter den Geschwindigkeitsschwellenwert fiel, und
- einer Standardabweichung-Filtersubkomponente (104-1) der Bildvorverarbeitung-Softwarekomponente (104), die ausgebildet ist zum Ausführen von Filterung der Durchschnittsbilder (AVGn).

9. Kameraanordnung (1) nach Anspruch 8, wobei die Bildvorverarbeitung-Softwarekomponente (104) ferner ausgebildet ist zum Schaffen in Schritt 3.A einer konvexen Hülle um das Reflexionsgebiet herum, wie es in Anspruch 3 definiert ist.

10. Kameraanordnung (1) nach Anspruch 8 oder 9, wobei die Bildvorverarbeitung-Softwarekomponente (104) ferner ausgebildet ist zum Durchführen des Topgebiet-Filterungsschritts 3.1, wie er in Anspruch 4 definiert ist.

11. Computerprogramm, das Anweisungen umfasst, die bewirken, dass die Kameraanordnung (1) nach einem der Ansprüche 8 bis 10 das Verfahren nach einem der Ansprüche 1 bis 7 ausführt.

**Revendications**

1. Procédé d'élimination de lumière parasite d'une vitre de véhicule égo dans un dispositif de caméra (1) comprenant une caméra (10) orientée vers l'extérieur et configurée pour fournir des images à une chaîne de traitement (2) d'un système avancé d'aide à la conduite (ADAS), ladite caméra (10) étant montée à l'intérieur du véhicule égo et orientée vers ladite vitre, la séquence d'étapes répétitives suivante étant mise en oeuvre :

   Étape 1 : Acquisition d'une image brute (IMGn) par un composant logiciel d'acquisition d'image (102) à partir de ladite caméra (10) et incrémentation du nombre (n) d'images brutes acquises tel que compté par un compteur du composant logiciel d'acquisition d'image (102) d'une unité, et envoi de l'image brute (IMGn) à un composant logiciel de prétraitement d'image (104) au moyen d'au moins une mémoire (103),

   Étape 2 : Calcul, au moyen du composant logiciel de prétraitement d'image (104), pour chaque pixel correspondant d'un nombre (n) d'images brutes (IMGn) successives formant une pluralité d'images brutes (IMGn) d'une moyenne de l'intensité lumineuse, obtention d'une image moyenne (AVGn) et envoi de l'image moyenne calculée (AVGn) à l'au moins une mémoire (103),

   le nombre (n) des images brutes (IMGn) de ladite pluralité dépendant des conditions de conduite comme suit :

   ledit compteur du composant logiciel d'acquisition (102) incrémentant le nombre (n) d'images brutes (IMGn) acquises étant remis à zéro et une nouvelle pluralité étant utilisée pour calculer l'image moyenne (AVGn) lorsque la vitesse d'angle de lacet du véhicule égo est supérieure à un seuil prédéterminé de vitesse d'angle de lacet, et lorsqu'il y a un changement de l'intensité lumineuse d'image au cours de la dernière période jusqu'à dix images brutes (IMGn) de l'intervalle de temps pour lequel l'image moyenne (AVGn) a été calculée, à condition que :

   la modification respective de l'intensité lumineuse d'image concernant un pourcentage de la surface des images brutes (IMGn) supérieur à un seuil de pourcentage de surface prédéterminé, et

   la zone respective affectée par la modification de l'intensité lumineuse d'image présentant une différence d'intensité lumineuse supérieure à un seuil de différence d'intensité lumineuse prédéterminé, et

   - si la vitesse du véhicule égo est inférieure à un seuil de vitesse, l'image moyenne (AVGn) reste égale à la dernière image moyenne (AVGn-1) avant que la vitesse du véhicule égo ne soit inférieure audit seuil de vitesse, tant que la vitesse du véhicule égo ne dépasse pas ledit seuil de vitesse,

   Étape 3 : identification d'une zone de réflexion dans l'image moyenne (AVGn) au moyen du composant logiciel de prétraitement d'image (104) en deux sous-étapes :

   dans la première sous-étape, application d'un filtrage pour chaque pixel de la zone entière de l'image moyenne (AVGn) au moyen d'un sous-composant de filtre d'écart type (104-1) du composant logiciel de prétraitement d'image (104), dans la deuxième sous-étape, création d'une image binaire à l'aide d'un seuil d'intensité d'écart type de pixel prédéterminé, ladite image binaire formant un masque (IMGn-wstrlight) couvrant la zone de réflexion, ladite zone de réflexion identifiée par les pixels dont l'écart-type d'intensité lumineuse de l'image moyenne (AVGn) est supérieur audit seuil d'écart-type d'intensité de pixel, obtention d'une image moyenne masquée (mask_IMGn-wstrlight) comprenant la zone de réflexion (IMGn-wstrlight) et envoi de l'image moyenne masquée (mask_IMGn-wstrlight) à l'au moins une mémoire (103),

   Étape 4 - acquisition par le composant logiciel d'acquisition d'image (102) à partir de ladite caméra (10) d'une image brute immédiatement ultérieure (IMGn+1) de ladite pluralité et envoi de ladite image brute immédiatement ultérieure (IMGn+1) au composant logiciel de prétraitement d'image (104) au moyen de l'au moins une mémoire (103),

   Étape 5 - Élimination, au moyen du composant logiciel de prétraitement d'image (104), de la zone de réflexion de l'image brute immédiatement ultérieure (IMGn+1) en soustrayant de l'intensité lumineuse de chaque pixel de la zone de réflexion de l'image brute immédiatement ultérieure (IMGn+1) l'intensité lumineuse de chaque pixel correspondant de l'image moyenne masquée (masque IMGn-wstrlight), l'intensité lumineuse de chaque pixel correspondant du masque étant multipliée par un premier poids, et ledit premier poids étant dépendant de l'intensité lumineuse du pixel respectif de l'image brute immédiatement ultérieure (IMGn+1),

   obtention d'une image sans réflexion (IMG-Rn+1) et envoi de celle-ci à l'au moins une mémoire (103) ;

   Étape 6 : Compensation, au moyen du composant logiciel de prétraitement d'image (104), de la perte d'intensité lumineuse de la zone de réflexion de l'image sans réflexion (IMG-Rn+1), en deux sous-étapes :

dans la première sous-étape, calcul d'un facteur moyen de la perte d'intensité lumineuse entre la zone de réflexion de l'image brute immédiatement ultérieure (IMGn+1) et l'image sans réflexion (IMG-Rn+1), dans la deuxième sous-étape, utilisation dudit facteur moyen de la perte d'intensité lumineuse pour compenser la perte d'intensité lumineuse de la zone de réflexion de l'image sans réflexion (IMG-Rn+1), obtention d'une image corrigée (IMG-Cn+1) dont la réflexion a été éliminée et l'intensité lumineuse compensée,

Étape 7 : stockage temporaire de l'image corrigée (IMG-Cn+1) avec élimination des réflexions et compensation de l'intensité lumineuse dans l'au moins un composant de mémoire (103), ladite image corrigée étant ensuite utilisée par la chaîne de traitement du système avancé d'aide à la conduite ADAS (2).

2. Procédé selon la revendication 1, l'image moyenne (AVGn) de l'intensité lumineuse de la pluralité étant calculée comme une moyenne mathématique selon la formule :

$$\text{Moyenne}_n = (\text{Moyenne}_{n-1} * \text{nombre d'images de la pluralité sur lesquelles la Moyenne}_{n-1} \text{ a été calculée} + \text{IMGn}) / (\text{nombre d'images de la pluralité sur lesquelles la Moyenne}_{n-1} \text{ a été calculée} + 1).$$

3. Procédé selon les revendications 1 ou 2, le procédé comprenant en outre, après l'étape 3, une étape supplémentaire 3.A de création d'une coque convexe autour de la zone de réflexion.

4. Procédé selon les revendications 1 ou 2, le procédé comprenant en outre avant l'étape 3, une étape 3.1 de filtrage de la zone supérieure qui exclut de l'étape d'identification de la zone de réflexion une partie, de l'image brute (IMGn) située à son sommet.

5. Procédé selon les revendications 3 et 4, le procédé comprenant en outre l'étape de filtrage de la zone supérieure 3.1 avant l'étape 3, et l'étape 3.A de création de la coque convexe après l'étape 3.

6. Procédé selon l'une quelconque des revendications précédentes, la caméra (10) étant configurée pour faire face au pare-brise du véhicule égo pour l'acquisition d'images orientées vers l'avant ou vers le pare-brise arrière du véhicule pour l'acquisition d'images orientées vers l'arrière ou vers les vitres latérales pour les images orientées vers le côté.

7. Procédé selon l'une quelconque des revendications précédentes, la caméra (10) étant configurée pour avoir un champ de vision de plus de 60° mesuré dans le plan horizontal.

8. Dispositif de caméra (1) monté à l'intérieur d'un véhicule et orienté vers au moins une vitre du véhicule, adapté pour exécuter les étapes du procédé selon les revendications 1 à 7, le dispositif de caméra (1) comprenant :

- une caméra (10) de système avancé d'aide à la conduite (ADAS) comprenant une monture d'objectif de caméra (100) comprenant au moins un objectif et un capteur d'image de caméra (101) configuré pour prendre des images de l'extérieur du véhicule et configuré en outre pour détecter l'intensité lumineuse de la lumière extérieure,
- un composant logiciel d'acquisition d'image (102), configuré pour acquérir des images brutes (IMGn) à partir du capteur d'images de la caméra (101) et comprenant un compteur comptant le nombre (n) d'images brutes acquises, et configuré en outre pour régler les paramètres du capteur d'images de la caméra (101) tels que : le temps d'exposition de l'image, la région d'intérêt, la période d'acquisition, et configuré en outre pour envoyer les images brutes (IMGn) acquises à au moins un composant de mémoire (103) afin d'être utilisées par un composant logiciel de prétraitement d'image (104),
- au moins une mémoire (103), configurée pour stocker temporairement les variables et les paramètres nécessaires à l'élimination des réflexions, tels que : les images brutes (IMGn), les images moyennes (AVGn), les images moyennes (AVGn) comprenant ledit masque (IMGn-wstrlight), les images sans réflexion (IMG-Rn+1), les images corrigées (IMG-Cn+1) avec élimination des réflexions et compensation de l'intensité lumineuse, le nombre (n) d'images brutes (IMGn) de la pluralité, le premier poids utilisé à l'étape 5 du procédé, le seuil d'intensité de l'écart type des pixels pour la création d'une image binaire formant un masque (IMGn-wstrlight) couvrant la zone de réflexion et le facteur moyen ; le seuil prédéterminé de vitesse d'angle de lacet, le seuil prédéterminé de pourcentage de surface, le seuil prédéterminé de différence d'intensité lumineuse, le seuil prédéterminé de vitesse,

- le composant logiciel de prétraitement d'image (104), configuré pour recevoir des images brutes (IMGn) du composant logiciel d'acquisition (102) au moyen de l'au moins une mémoire (103), configuré pour calculer lesdites images moyennes (AVGn), pour créer des images binaires formant un masque (IMGn-wstrlight) couvrant la zone de réflexion desdites images moyennes (AVGn), pour éliminer la zone de réflexion des images brutes immédiatement ultérieures (IMGn+1) correspondant audit masque (IMGn-wstrlight), pour calculer le facteur moyen de la perte d'intensité lumineuse, pour compenser la perte d'intensité lumineuse des images sans réflexion (IMG-Rn+1) et envoyer les images corrigées (IMG-Cn+1) avec élimination des réflexions et compensation de l'intensité lumineuse à l'au moins une mémoire (103) pour être utilisées par la chaîne de traitement du système avancé d'aide à la conduite ADAS (2) ; le composant logiciel d'acquisition d'image (102) étant en outre configuré pour remettre à zéro ledit compteur et pour utiliser une nouvelle pluralité pour calculer l'image moyenne (AVGn) lorsque la vitesse d'angle de lacet du véhicule égo est supérieure audit seuil prédéterminé de vitesse d'angle de lacet, pour remettre à zéro ledit compteur, et pour utiliser une nouvelle pluralité afin de calculer l'image moyenne (AVGn) lorsque les conditions de conduite prévues dans la revendication 1 sont remplies, pour utiliser l'image moyenne (AVGn) de la dernière moyenne de l'intensité lumineuse, l'image moyenne (AVGn-1) avant que la vitesse du véhicule égo ne soit tombée en dessous dudit seuil de vitesse, et

- un sous-composant de filtre d'écart type (104-1) du composant logiciel de prétraitement d'image (104) configuré pour réaliser un filtrage des images moyennes (AVGn).

9. Dispositif de caméra (1) selon la revendication 8, le composant logiciel de prétraitement d'image (104) étant en outre configuré pour créer à l'étape 3.A une coque convexe autour de la zone de réflexion selon la revendication 3.

10. Dispositif de caméra (1) selon la revendication 8 ou 9, le composant logiciel de prétraitement d'image (104) étant en outre configuré pour réaliser l'étape 3.1 de filtrage de la zone supérieure selon dans la revendication 4.

11. Programme d'ordinateur comprenant des instructions pour que le dispositif de caméra (1) selon l'une quelconque des revendications 8 à 10 exécute le procédé selon l'une quelconque des revendications 1 à 7.

Fig. 1

Fig. 2

FoV>60degrees

50 degrees FOV

Fig. 3a

FoVH

FoV>60degrees

Fig. 3b

Fig. 4

Fig.5

Fig. 6

Fig. 7a

Fig. 7b

Fig. 8a

Fig. 8b

Fig. 9a

Fig. 9b

Fig. 10a

Fig. 10b

Fig. 11a

Fig. 11b

Fig. 12a

Fig. 12 b

Fig. 13a

Fig. 13b

Fig. 14a

Fig. 14b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190031117 A1
- US 20170227791 A1
- US 20170227791 A
- DE 102017202155 A1

### Non-patent literature cited in the description

- Reflection Removal for In-Vehicle Black Box Videos. **CHRISTIAN SIMON ; IN KYU PARK.** 2015 IEEE Conference on Computer Vision and Pattern Recognition (CVPR). Department of Information and Communication Engineering, Inha University, July 2015, 4231-4239

- **JUN YOUNG CHEONG et al.** Reflection Removal Under Fast Forward Camera Motion. *IEEE Transactions on Image Processing,* September 2017, vol. 26 (12), 6061-6073